(19) Europäisches Patentamt
European Patent Office
Office européen des brevets

(11) **EP 2 530 394 A1**

(12) **EUROPEAN PATENT APPLICATION**
published in accordance with Art. 153(4) EPC

(43) Date of publication:
**05.12.2012 Bulletin 2012/49**

(51) Int Cl.:
***F24F 11/02*** *(2006.01)*

(21) Application number: **11736925.6**

(22) Date of filing: **21.01.2011**

(86) International application number:
**PCT/JP2011/051049**

(87) International publication number:
**WO 2011/093212 (04.08.2011 Gazette 2011/31)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.01.2010 JP 2010015241**

(71) Applicant: **Mitsubishi Heavy Industries, Ltd.
Tokyo 108-8215 (JP)**

(72) Inventors:
• **KANBARA, Hiroshi
Tokyo 108-8215 (JP)**

• **SATO, Makoto
Tokyo 108-8215 (JP)**
• **KORESAWA, Takeyuki
Tokyo 108-8215 (JP)**

(74) Representative: **Bongiovanni, Simone et al
Studio Torta S.p.A.
Via Viotti, 9
IT-10121 Torino (IT)**

(54) **AIR CONDITIONER AND AIR CONDITIONER CONTROL METHOD**

(57) Provided are an air conditioner and an air conditioner control method capable of preventing dew attachment during cooling operation in single-type indoor units used in a multi-type air conditioner. The air conditioner is provided with a control unit (7), which controls a discharge refrigerant flow rate of a compressor (21) which circulates a refrigerant, and a storage unit, which stores information relating to single-type indoor units (4A, 4B, 4C and 4D) and also stores an indoor maximum request flow rate, which is an upper limit of a discharge refrigerant flow rate requested to the compressor (21).

In the control unit (7) is stored an outdoor maximum request flow rate which, less than the indoor maximum request flow rate, is an upper limit of the discharge refrigerant flow rate based on information obtained from the storage unit (45). The control unit (7) controls the discharge refrigerant flow rate on the basis of the outdoor maximum request flow rate when, during cooling operation, a temperature of the air sucked into the single-type indoor units (4A, 4B, 4C and 4D) reaches or exceeds a prescribed air temperature and a prescribed interval elapses.

FIG. 1

## Description

Technical Field

The present invention relates to an air conditioner in which a plurality of indoor units are connected to one outdoor unit in a parallel manner and are operated independently, and an air conditioner control method.

{Background Art}

As a type of an air conditioning apparatus, a single-type and a multi-type are generally known. The former has a structure in which one indoor unit is connected to one outdoor unit, and the latter has a structure in which a plurality of indoor units capable of operation control independently are connected to one outdoor unit.
With the above-described multi-type air conditioning apparatus, depending on a condition of a room in which they are installed, preferences of a user, etc., a plurality of indoor units may be operated with different capacity or airflow settings even when they are operated in a same operation mode such as cooling operation or heating operation. Also, depending on installation locations, a plurality of indoor units having different air conditioning capacities may be combined and connected to one outdoor unit.

With the above-mentioned multi-type air conditioning apparatus, when a plurality of indoor units are operated simultaneously during cooling or dehumidification operation with different capacity and airflow settings, dew condensation or dew attachment could occur on a runner portion passing through an indoor heat exchanger.

Such dew condensation or the like occurs when electronic expansion valves, which are disposed in each of the indoor units and performing adjustment of an opening degree independently, are stabilized in a state in which a refrigerant is distributed in a highly unbalanced manner according to an opening degree instruction received at the start of operation (or on startup).
Meanwhile, even when a plurality of indoor units with different capacity or airflow settings are operated simultaneously and balanced operations are maintained in a proper condition, the balance of distributing a refrigerant may be lost if disturbance occurs to cause adjustment of an opening degree of an expansion valve, such as oil tempering control, just like at the start of operation described above, causing dew condensation or dew attachment in an indoor unit having a lower capacity setting (see Patent Citation 1 for example).

Citation List

Patent Literature

{PTL 1}

Japanese Unexamined Patent Application, Publication No. 2006-234296

Summary of Invention

Technical Problem

As a method of preventing the above-described dew condensation, a method of independently controlling an opening degree of electronic expansion valves corresponding to each of indoor units has been used.
Also, since an indoor unit capable for a multi-type configuration is commonly used in a multi-type air conditioning apparatus, an airflow setting for preventing dew condensation has been applied to the indoor unit in addition to the above-described electronic expansion valve control to prevent dew condensation.

Meanwhile in recent years, a single-type indoor unit, or an indoor unit designed for a configuration in which one indoor unit is connected to one outdoor unit, is sometimes used (or commoditized to be used) in a multi-type air conditioner. In other words, a plurality of single-type indoor units may be connected to a multi-type outdoor unit in parallel, or a multi-type indoor unit and a single-type indoor unit are combined and connected to a multi-type outdoor unit in parallel.

If a single-type indoor unit is connected to a multi-type outdoor unit as described above, prevention of dew condensation could become insufficient, causing dew condensation to occur, since a single-type indoor unit does not have the above-described airflow setting for preventing dew condensation.
That is, there is a problem that opening degree control of an electronic expansion valve disposed in a multi-type outdoor unit is not sufficient by itself to prevent dew condensation in a single-type indoor unit.

The present invention has been conceived in light of the above-described circumstances, and an object thereof is to provide an air conditioner and an air conditioner control method capable of preventing dew attachment during cooling operation when a single-type indoor unit is used in a multi-type air conditioner, regardless of control in the single-type indoor unit.

Solution to Problem

In order to solve the above-described problems, the present invention employs the following solutions.
An air conditioner according to a first aspect of the present invention is an air conditioner in which a single-type indoor unit corresponding to an outdoor unit on a one-to-one basis is connected to a multi-type outdoor unit corresponding to indoor units on a one-to-many basis, the air conditioner including: a control unit provided in the multi-type outdoor unit to control a discharge refrigerant flow rate of a compressor for circulating a refrigerant between the multi-type outdoor unit and the single-type indoor unit; and a storage unit to store information relating to the single-type indoor unit and an indoor maximum request flow rate which is an upper limit of the discharge refrigerant flow rate requested from the single-type indoor unit to the compressor, wherein the control unit stores an outdoor maximum request flow rate which is an upper limit of the discharge refrigerant flow rate determined on the basis of the information obtained from the storage unit and is smaller than the indoor maximum request flow rate; and during cooling operation, the control unit controls the discharge refrigerant flow rate on the basis of the outdoor maximum request flow rate when a temperature of the air sucked into the single-type indoor unit reaches or exceeds a prescribed air temperature and a prescribed interval elapses, or controls the discharge refrigerant flow rate on the basis of the indoor maximum request flow rate otherwise.

According to the first aspect of the present invention, dew attachment or dew condensation can be prevented in a single-type indoor unit connected to a multi-type outdoor unit regardless of an indoor maximum request flow rate stored in the single-type indoor unit, airflow control in the single-type indoor unit, or the like.

Specifically, when dew attachment or the like can easily occur, in other words, when the temperature of the air sucked into the single-type indoor unit reaches or exceeds a prescribed air temperature (such as about 22°C) and a prescribed interval (such as about a minute) elapses, the upper limit of the discharge refrigerant flow rate of the compressor is set to the outdoor maximum request flow rate. This makes the maximum value of the discharge refrigerant flow rate smaller, compared with when the upper limit of the discharge refrigerant flow rate is set to the indoor maximum request flow rate, lowering the cooling capacity of the single-type indoor unit. As a result, dew attachment or dew condensation can be prevented in the single-type indoor unit. Also, since the outdoor maximum request flow rate is stored in a control unit provided in the multi-type outdoor unit, dew attachment or dew condensation can be prevented in the single-type indoor unit without additional efforts such as modifying the single-type indoor unit.

On the other hand, when dew attachment or the like hardly occurs, that is, when the temperature of the air sucked into the single-type indoor unit is less than the prescribed air temperature or when the temperature of the air is equal to or higher than the prescribed air temperature but the prescribed interval does not elapse, the upper limit of the flow rate of a refrigerant discharged from a compressor is set to the indoor maximum request flow rate. The indoor maximum request flow rate is defined based on a type or capacity of the single-type indoor unit without considering preventing dew attachment or the like, and is larger than the outdoor maximum request flow rate defined for the purpose of preventing dew attachment or the like. Thus, compared with when the upper limit of the discharge refrigerant flow rate is set to the outdoor maximum request flow rate, the maximum value of the discharge refrigerant flow rate becomes larger, allowing the single-type indoor unit to exercise its cooling capacity defined in design.

With the above invention, when a plurality of the single-type indoor units are connected to the multi-type outdoor unit and half or less than half of the single-type indoor units are performing cooling operation, and a temperature of an indoor heat exchanger of the single-type indoor units performing cooling operation is less than a prescribed heat exchange temperature, the control unit preferably performs correction to reduce a request refrigerant flow rate, which is the discharge refrigerant flow rate requested from the single-type indoor units performing cooling operation to the control unit.

According to the first aspect of the present invention, even when a flow rate of a refrigerant supplied to a single-type indoor unit becomes so large that dew attachment or the like can easily occurs, in other words, when a majority of a plurality of indoor units connected to a multi-type outdoor unit stop cooling operation and half or less than half of the single-type indoor units are performing cooling operation, dew attachment or dew condensation can be prevented in the single-type indoor units.

Specifically, when the temperature of the indoor heat exchanger is less than the prescribed heat exchange temperature, correction to reduce the request refrigerant flow rate is performed, and the compressor is controlled based on the corrected request refrigerant flow rate. This reduces the discharge refrigerant flow rate as well as a flow rate of a refrigerant supplied to the indoor heat exchanger. As a result, the temperature of the indoor heat exchanger reaches or exceeds the prescribed heat exchange temperature, enabling to prevent dew attachment or dew condensation in the single-type indoor units.

An air conditioner control method of a second aspect of the present invention is a control method of an air conditioner in which a single-type indoor unit corresponding to an outdoor unit on a one-to-one basis is connected to a multi-type outdoor unit corresponding to indoor units on a one-to-many basis, the method including: a suction temperature determination step for determining whether a temperature of the air sucked into the single-type indoor unit reached or exceeded a prescribed temperature and a prescribed interval elapses; a maximum value obtaining step for obtaining an outdoor maximum request flow rate which is an upper limit of a discharge refrigerant flow rate of a compressor determined on the basis of information relating to the single-type indoor unit and is less than an indoor maximum flow rate stored in the single-type indoor unit, if the condition of the suction temperature determination step is met; a default value obtaining step for obtaining, instead of the outdoor maximum request flow rate, a default maximum request flow rate which is larger than the indoor maximum request flow rate, if the condition of the suction temperature determination step is not met; and a selection step for selecting a smaller value of the outdoor maximum request flow rate and the indoor maximum request flow rate, or a smaller value of the default maximum request flow rate and the indoor maximum request flow rate, as the maximum value of the discharge refrigerant flow rate, wherein the control unit controls the discharge refrigerant flow rate on the basis of the maximum value of the discharge refrigerant flow rate selected at the selection step.

According to the second aspect of the present invention, dew attachment or dew condensation can be prevented in a single-type indoor unit connected to a multi-type outdoor unit regardless of an indoor maximum request flow rate stored in the single-type indoor unit, airflow control in the single-type indoor unit, or the like.

Specifically, when dew attachment or the like can easily occurs, that is, when the temperature of the air sucked into the single-type indoor unit reaches or exceeds the prescribed air temperature (such as about 22°C) and the prescribed interval (such as about a minute) elapses, a smaller value of the outdoor maximum request flow rate and the indoor maximum request flow rate (that is, the outdoor maximum request flow rate) is selected as the maximum value of the discharge refrigerant flow rate. As a result, compared with when the indoor maximum request flow rate is selected as the upper limit of the discharge refrigerant flow rate, the maximum value of the discharge refrigerant flow rate becomes smaller, enabling to prevent dew attachment or dew condensation in the single-type indoor unit.

On the other hand, when dew attachment or the like hardly occurs, that is, when the temperature of the air sucked into the single-type indoor unit is less than the prescribed air temperature or when the temperature of the air is equal to or higher than the prescribed air temperature but the prescribed interval does not elapse, a smaller value of the default maximum request flow rate and the indoor maximum request flow rate (that is, the indoor maximum request flow rate) is selected as the maximum value of the discharge refrigerant flow rate. As a result, compared with when the outdoor maximum request flow rate is selected as the upper limit of the discharge refrigerant flow rate, the maximum value of the discharge refrigerant flow rate becomes larger, enabling the single-type indoor unit to exercise its cooling capacity defined in design.

Advantageous Effects of Invention

According to an air conditioner and an air conditioner control method of the present invention, when the temperature of the air sucked into a single-type indoor unit reaches or exceeds a prescribed air temperature and a prescribe interval elapses during cooling operation, a discharge refrigerant flow rate is controlled based on an outdoor maximum request flow rate, which is less than an indoor maximum request flow rate, or the upper limit of the discharge refrigerant flow rate requested from the single-type indoor unit to a compressor, enabling to prevent dew attachment during cooling operation regardless of control in the single-type indoor unit even if a single-type indoor unit is used in a multi-type air conditioner.

Brief Description of Drawings

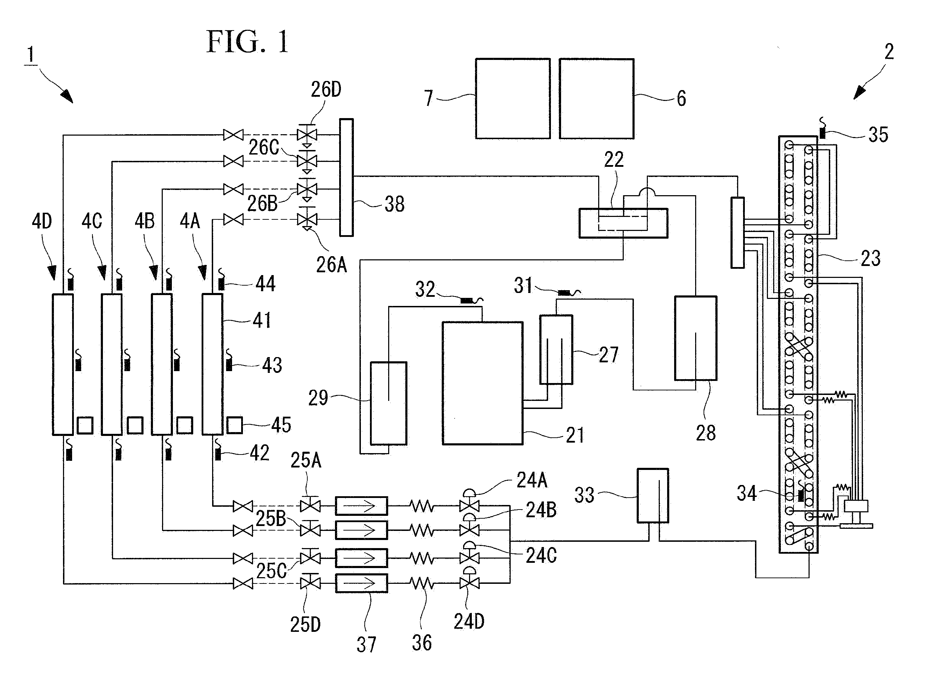

{Fig. 1}
Fig. 1 is a schematic diagram describing the configuration of an air conditioner according to one embodiment of the present invention;
{Fig. 2}
Fig. 2 is a block diagram describing the configuration of a calculation unit and a control unit in Fig. 1;
{Fig. 3}
Fig. 3 is a flow chart describing a setting method of a maximum rotation speed in the air conditioner in Fig. 1;
{Fig. 4}
Fig. 4 is a flow chart describing rotation speed control of a compressor in the air conditioner in Fig. 1;
{Fig. 5}
Fig. 5 is a flow chart describing the rotation speed control of the compressor in the air conditioner in Fig. 1;
{Fig. 6}
Fig. 6 is a flow chart describing the rotation speed control of the compressor in the air conditioner in Fig. 1; and

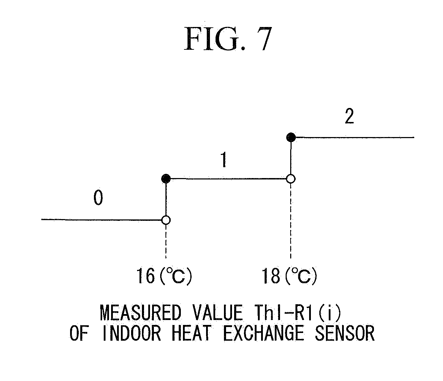

{Fig. 7}
Fig. 7 is a graph describing a determination condition of a temperature measured by an indoor heat exchange sensor.

{Description of Embodiments}

An air conditioning apparatus according to one embodiment of the present invention will now be described with reference to Figs. 1 to 7.
Fig. 1 is a schematic diagram describing the configuration of an air conditioner according to the present embodiment.
As shown in Fig 1, an air conditioner 1 of the present embodiment is an air conditioner including one outdoor unit (or multi-type outdoor unit) 2 and four single-type indoor units 4A, 4B, 4C and 4D. The number of indoor units is not limited to four, as long as it is plural.
The single-type indoor units 4A, 4B, 4C and 4D are an indoor unit which is supposed to be connected to a single-type outdoor unit on a one-to-one basis, and the multi-type outdoor unit 2 is an outdoor unit to which a plurality of indoor units are supposed to be connected.
The upper limit of a request rotation speed sent from each of the single-type indoor units 4A, 4B, 4C and 4D to a calculation unit 6 of the outdoor unit 2 is defined on the basis of the maximum rotation speed of a compressor in a single-type outdoor unit, and a request refrigerant discharge flow rate at the upper limit of the request rotation speed is less than a refrigerant discharge flow rate at the maximum rotation speed of a compressor in the multi-type outdoor unit 2.
As shown in Fig. 1, the outdoor unit 2 mainly includes a compressor 21, a four-way valve 22, an outdoor heat exchanger 23, expansion valves 24A, 24B, 24C and 24D, a calculation unit 6 and a control unit 7.
Furthermore, liquid-side control valves 25A, 25B, 25C and 25D and gas-side control valves 26A, 26B, 26C and 27D are provided between the outdoor unit 2 and the single-type indoor units 4A, 4B, 4C and 4D.
The compressor 21, for circulating a refrigerant between the outdoor unit 2 and the four single-type indoor units 4A, 4B, 4C and 4D, sucks a refrigerant at low temperature and pressure and compresses it to a refrigerant at high temperature and pressure. In other words, the compressor 21 is capable of achieving a discharge refrigerant flow rate enough to circulate a required refrigerant to the single-type indoor units 4A, 4B, 4C and 4D.
To an inlet of the compressor 21, an accumulator 27 and a separate accumulator 28 are connected so that a refrigerant can be circulated, and a muffler 29 is connected to an outlet of the compressor 21 so that a refrigerant can be circulated.
A driving rotation speed of the compressor 21 is controlled by the control unit 7 to control a discharge refrigerant flow rate, which is a flow rate of a refrigerant discharged from the compressor 21.
The compressor 21 may be a known compressor such as a scroll-type compressor driven by a motor, and is not restricted to a particular compressor.
The accumulator 27 and the separate accumulator 28 supply a gaseous refrigerant to the compressor 21 as well as temporarily accumulate a liquid refrigerant to adjust a flow rate of a refrigerant between the outdoor unit 2 and the four single-type indoor units 4A, 4B, 4C and 4D.
The accumulator 27 is provided between the compressor 21 and the separate accumulator 28, and connected to the inlet of the compressor 21 so that a gaseous refrigerant can be supplied. The separate accumulator 28 is provided between the accumulator 27 and the four-way valve 22, and is connected to the accumulator 27 so that a gaseous refrigerant can be supplied.
On a pipe connecting the accumulator 27 and the separate accumulator 28, a suction pipe sensor 31 is provided for measuring the temperature of the refrigerant sucked into the compressor 21.
The muffler 29 mitigates pressure fluctuations of a refrigerant discharged from the compressor 21, and suppresses vibration and noise caused by the pressure fluctuations.
The muffler 29 is provided between the compressor 21 and the four-way valve 22, and connected to the outlet of the compressor 21 so that a refrigerant can be circulated. On a pipe connecting the muffler 29 and the compressor 21, a discharge pipe sensor 32 is provided for measuring the temperature of the refrigerant discharged from the compressor 21.
The four-way valve 22 controls a flow destination of the refrigerant discharged from the compressor 21 according to an operation status of the air conditioner 1.
Specifically, during cooling operation, the four-way valve 22 leads the refrigerant discharged from the compressor 21 to an outdoor heat exchanger 23, and leads the refrigerant flowed from an indoor heat exchanger 41 to the compressor 21. During heating operation, the four-way valve 22 leads the refrigerant discharged from the compressor 21 to the indoor heat exchanger 41, and leads the refrigerant flowed from the outdoor heat exchanger 23 to the compressor 21.
The four-way valve 22 is connected so that a refrigerant can flow to the separate accumulator 28 and flow from the muffler 29. At the same time, the four-way valve 22 is connected so that a refrigerant can flow to or from the outdoor heat exchanger 23 and the indoor heat exchanger 41 of the single-type indoor units 4A, 4B, 4C and 4D.
The four-way valve 22 may be a known valve, and is not restricted to a particular valve.
The outdoor heat exchanger 23 performs heat exchange between outdoor air and a refrigerant. Specifically, the outdoor heat exchanger 23 dissipates the heat of a refrigerant to outdoor air during cooling operation, and makes a refrigerant absorb the heat of outdoor air during heating operation. The outdoor heat exchanger 23 is provided between the four-way valve 22 and a receiver 33, and connected to both of them so that a refrigerant can be circulated.

Provided on the outdoor heat exchanger 23 are an outdoor heat exchanger sensor 34 for measuring the temperature of the outdoor heat exchanger 23 and an outdoor air temperature sensor 35 for measuring the temperature of outdoor air.

The receiver 33 is provided between the outdoor heat exchanger 23 and the expansion valves 24A, 24B, 24C and 24D, and connected to both of them so that a refrigerant can be circulated. The receiver 33 supplies a liquid refrigerant to the expansion valves 24A, 24B, 24C and 24D mainly during cooling operation.

The expansion valves 24A, 24B, 24C and 24D adiabatically expand a refrigerant passing therethrough and lower the temperature and pressure of the refrigerant. The expansion valves 24A, 24B, 24C and 24D are disposed so as to correspond, or circulate a refrigerant, to the single-type indoor units 4A, 4B, 4C and 4D respectively. Specifically, the expansion valves 24A, 24B, 24C and 24D are respectively disposed to four pipes which are branching from a pipe extending from the receiver 33 to correspond to the single-type indoor units 4A, 4B, 4C and 4D.

Also, the expansion valves 24A, 24B, 24C and 24D are an electronic expansion valve whose opening degree is controlled by the control unit 7.

The liquid-side control valves 25A, 25B, 25C and 25D are portions to which pipes extending from the single-type indoor units 4A, 4B, 4C and 4D are connected, and they are a control valve disposed so as to correspond to each of the single-type indoor units 4A, 4B, 4C and 4D. At the same time, the liquid-side control valves 25A, 25B, 25C and 25D are disposed so as to correspond to the expansion valves 24A, 24B, 24C and 24D via a silencing capillary 36 and a strainer 37.

The gas-side control valves 26A, 26B, 26C and 26D are portions to which pipes extending from the single-type indoor units 4A, 4B, 4C and 4D are connected, and they are a control valve disposed so as to correspond to each of the single-type indoor units 4A, 4B, 4C and 4D. The gas-side control valves 26A, 26B, 26C and 26D are connected to the four-way valve 22 via a manifold 38 so that a refrigerant can be circulated.

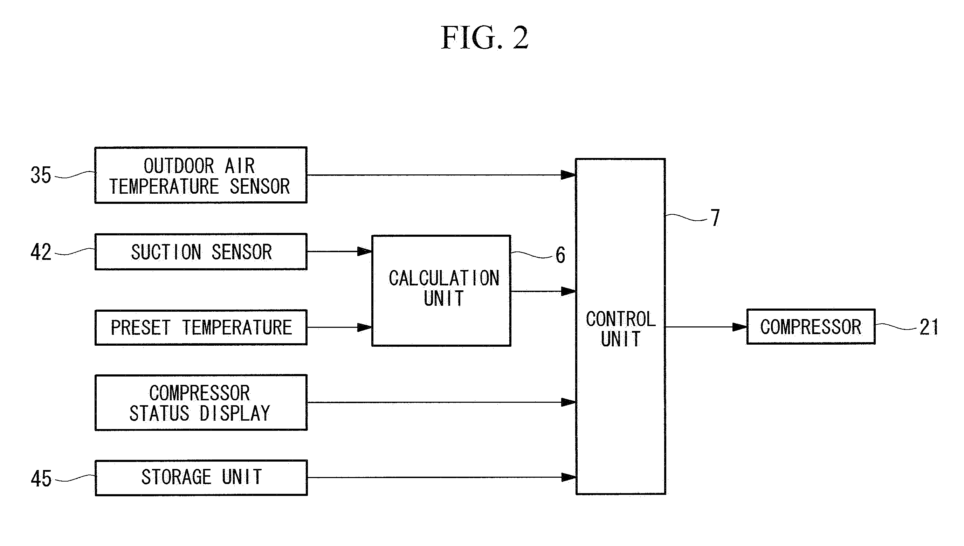

Fig.2 is a block diagram describing the configuration of a calculation unit and a control unit in Fig. 1.

The calculation unit 6 calculates a request rotation speed at each of the single-type indoor units 4A, 4B, 4C and 4D. The request rotation speed is a value calculated based on a request discharge flow rate which is a refrigerant flow rate required for the single-type indoor units 4A, 4B, 4C and 4D to exercise a required cooling capacity under their own operating status.

Also, as shown in Fig. 2, a measured value of a temperature of the indoor air sucked into the single-type indoor unit 4A measured by a suction sensor 42 and a value of a preset temperature for indoor air input into the single-type indoor unit 4A are input into the calculation unit 6. Meanwhile, the request rotation speed calculated by the calculation unit 6 is input into the control unit 7. Even though Fig. 2 shows, for simplicity, only the configuration corresponding to the single-type indoor unit 4A, a similar configuration is also provided for the single-type indoor units 4B, 4C and 4D. A method of calculating a request rotation speed in the calculation unit 6 will be described later.

As shown in Figs. 1 and 2, the control unit 7 controls the operating status of the air conditioner 1, especially the rotation speed of the compressor 21. Specifically, the control unit 7 controls the rotation speed of the compressor 21 based on a rotation speed calculated by summing up request rotation speeds of the single-type indoor units 4A, 4B, 4C and 4D. Also, the control unit 7 stores a map of a model of the single-type indoor units 4A, 4B, 4C and 4D and an outdoor maximum rotation speed (or an outdoor maximum request flow rate) X corresponding to the capacity of the model.

The control unit 7 may also control, without limitation, an opening degree of the expansion valves 24A, 24B, 24C and 24D, the operation status of an outdoor fan (not shown), the operating status of an indoor fan (not shown), the movement of a louver (not shown) in the single-type indoor units 4A, 4B, 4C and 4D, and the like.

Input into the control unit 7 are a measured value of an outdoor air temperature sensor 35, a request rotation speed calculated by the calculation unit 6, a compressor status display at the single-type indoor unit 4A, an indoor maximum rotation speed (or an indoor maximum request flow rate) Nmaxi(i) at the single-type indoor unit 4A, and information relating to a model and its capacity of the single-type indoor unit 4A. A control signal generated by the control unit 7 is input into the compressor 21. The indoor maximum rotation speed Nmaxi(i) and the information relating to a model and its capacity of the single-type indoor unit 4A are stored in a storage unit 45 provided in the single-type indoor unit 4A.

The detail of control performed by the control unit 7 will be described later.

The outdoor maximum rotation speed X is the maximum rotation speed of the compressor 21 defined for the purpose of preventing dew attachment or the like in the single-type indoor units 4A, 4B, 4C and 4D, and is a value relating to a flow rate of the refrigerant discharged from the compressor 21, a flow rate of the refrigerant supplied to the outdoor heat exchanger 23, and the like. In the present embodiment, the outdoor maximum rotation speed X has different values based on a model of the single-type indoor units 4A, 4B, 4C and 4D and its capacity, and it is supposed that those values are preliminarily determined in an experiment or the like.

The indoor maximum rotation speed Nmaxi(i) is the maximum rotation speed of the compressor 21 defined on the assumption that each of the single-type indoor units 4A, 4B, 4C and 4D is connected to a single-type outdoor unit.

The outdoor maximum rotation speed X is set to be less than the indoor maximum rotation speed Nmaxi(i), since its object is to prevent dew attachment or the like which occurs under the control using the indoor maximum rotation speed Nmaxi(i).

As shown in Fig. 1, the single-type indoor units 4A, 4B, 4C and 4D mainly include the indoor heat exchanger 41, the suction sensor 42, an indoor heat exchange sensor 43, a cooling outlet heat exchange sensor 44 and the storage unit 45.

The indoor heat exchanger 41 is provided in each of the single-type indoor units 4A, 4B, 4C and 4D and performs heat exchange between indoor air and a refrigerant. Specifically, the indoor heat exchanger 41 makes the refrigerant absorb the heat of the indoor air during cooling operation, and dissipates the heat of the refrigerant to the indoor air during heating operation.

The indoor heat exchangers 41 of the single-type indoor units 4A, 4B, 4C and 4D are connected to the liquid-side control valves 25A, 25B, 25C and 25D and the gas-side control valves 26A, 26B, 26C and 26D, respectively, so that a refrigerant can be circulated.

Provided on the indoor heat exchanger 41 are the suction sensor 42 for measuring the temperature of the indoor air sucked into the single-type indoor units 4A, 4B, 4C or 4D, the indoor heat exchange sensor 43 for measuring the temperature at a middle portion of the indoor heat exchanger 41, and the cooling outlet heat exchange sensor 44 for measuring the temperature at an end portion, which becomes a refrigerant outlet during cooling operation, of the indoor heat exchanger 41.

Cooling and heating operations of the air conditioner 1 having the above configuration will now be described.

As shown in Fig. 1, during cooling operation, the four-way valve 22 is switched to connect the outlet of the compressor 21 and the outdoor heat exchanger 23 as well as connect the inlet of the compressor 21 and the indoor heat exchanger 41.

A refrigerant at high temperature and pressure discharged from the compressor 21 flows via the muffler 29 and the four-way valve 22 into the outdoor heat exchanger 23. At the outdoor heat exchanger 23, the refrigerant dissipates heat to outdoor air to condense into a liquid refrigerant. The liquid refrigerant at high pressure is led from the outdoor heat exchanger 23 through the receiver 33 to the expansion valves 24A, 24B, 24C and 24D.

The liquid refrigerant at high pressure adiabatically expands when passing through the expansion valves 24A, 24B, 24C and 24D, and becomes a refrigerant at low temperature and pressure. The refrigerant at low temperature and pressure flows via the silencing capillary 36, the strainer 37 and the liquid-side control valves 25A, 25B, 25C and 25D into the indoor heat exchanger 41 of the single-type indoor units 4A, 4B, 4C and 4D. At the indoor heat exchanger 41, the refrigerant absorbs heat from indoor air to evaporate into a gaseous refrigerant. Meanwhile, the indoor air is cooled by being deprived of the heat.

The gaseous refrigerant is sucked into the inlet of the compressor 21 via the gas-side control valves 26A, 26B, 26C and 26D, the manifold 38, the four-way valve 22, the separate accumulator 28 and the accumulator 27. The sucked refrigerant is compressed by the compressor 21, and discharged from the outlet as a refrigerant at high temperature and pressure. The cooling operation is then continued by repeating the above-described procedure.

As shown in Fig.1, during heating operation, the four-way valve 22 is switched to connect the outlet of the compressor 21 and the indoor heat exchanger 41 as well as connect the inlet of the compressor 21 and the outdoor heat exchanger 23.

A refrigerant at high temperature and pressure discharged from the compressor 21 flows via the muffler 29 and the four-way valve 22 into the indoor heat exchanger 41. At the indoor heat exchanger 41, the refrigerant dissipates heat to indoor air to condense into a liquid refrigerant. Meanwhile, the indoor air absorbs the heat to be heated. The liquid refrigerant at high pressure is led from the indoor heat exchanger 41 through the liquid-side control valves 25A, 25B, 25C and 25D, the strainer 37 and the silencing capillary 36 to the expansion valves 24A, 24B, 24C and 24D.

The liquid refrigerant at high pressure adiabatically expands when passing through the expansion valves 24A, 24B, 24C and 24D, and becomes a refrigerant at low temperature and pressure. The refrigerant at low temperature and pressure flows via the receiver 33 into the outdoor heat exchanger 23. At the outdoor heat exchanger 23, the refrigerant absorbs heat from outdoor air to evaporate into a gaseous refrigerant.

The gaseous refrigerant is sucked into the inlet of the compressor 21 via the four-way valve 22, the separate accumulator 28 and the accumulator 27. The sucked refrigerant is compressed by the compressor 21, and discharged from the outlet as a refrigerant at high temperature and pressure. The cooling operation is then continued by repeating the above-described procedure.

Dew attachment prevention control performed when the single-type indoor units 4A, 4B, 4C and 4D are performing cooling operation, which is a feature of the present embodiment, will now be described. Specifically, it will be described how to set the upper limit of a rotation speed (or a maximum rotation speed) of the compressor 21, and how to control the rotation speed of the compressor 21. For simplicity, the following describes the case in which the single-type indoor unit 4A is performing cooling operation.

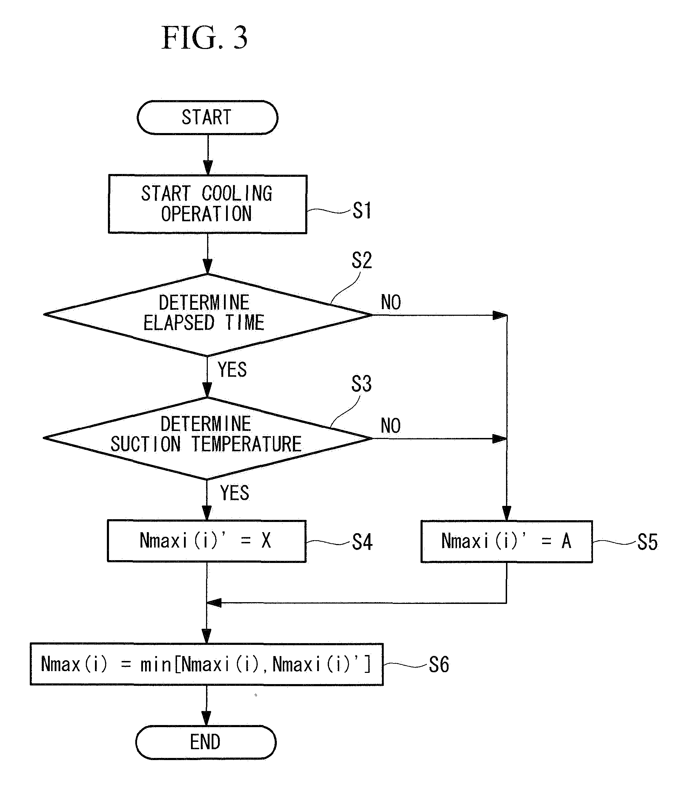

Fig. 3 is a flow chart describing a method of setting a maximum rotation speed in the air conditioner in Figure 1.

Setting a maximum rotation speed of the compressor 21 will now be described.

As shown in Fig. 3, when cooling operation of the air conditioner 1 starts (step S1), the control unit 7 determines whether a prescribed interval, such as about 30 minutes, has elapsed since cooling operation started or the like at the single-type indoor unit 4A (step S2).

Specifically, determination is made to whether the prescribed interval has elapsed since cooling operation started while the single-type indoor unit 4A was being stopped, or since cooling operation re-started after cooling thermo-operation stopped. This enables, at an initial stage of the cooling operation, to secure enough cooling capacity to avoid deterioration of coolness felt by users.

If it is determined that the prescribed interval has elapsed since cooling operation started or the like (YES), the control unit 7 determines whether a temperature of the indoor air sucked into the single-type indoor unit 4A meets prescribed conditions (step S3 (a suction temperature determination step)). Specifically, determination is made to whether a temperature of the indoor air measured by the suction sensor 42 is equal to or higher than a prescribed air temperature (such as about 22°C), and a prescribe interval (such as about a minute) has elapsed since the temperature of indoor air reached or exceeded the prescribed temperature.

If it is determined that the temperature of indoor air meets the prescribed conditions (YES), the control unit 7 obtains information relating to a model and capacity of the single-type indoor unit 4A from the storage unit 45 of the single-type indoor unit 4A. Based on the obtained information and a map stored in advance, the control unit 7 obtains the outdoor maximum rotation speed X as a control value Nmaxi(i)' (step S4 (a maximum value obtaining step)).

On the other hand, if it is determined that the prescribed interval has not elapsed since cooling operation started or the like (NO) or the temperature of indoor air does not meet the prescribed conditions (NO), a default maximum rotation speed A preliminarily stored in the control unit 7 is obtained as the control value Nmaxi(i)' (step S5 (a default value obtaining step)), instead of performing the above-described step S4.

The default maximum rotation speed A is larger than the outdoor maximum rotation speed X, and has a value of about 200 (rpm (rotation per second)), for example.

The control unit 7 selects a smaller value of the control value Nmaxi(i)' and the indoor maximum rotation speed Nmaxi(i) as the maximum rotation speed Nmax(i) of the compressor 21 (step S6 (a selection step)).

That is, if it is determined that the prescribed interval has elapsed since cooling operation started or the like (YES) and the temperature of indoor air meets the prescribed conditions (YES), the control value Nmaxi(i)', or the outdoor maximum rotation speed X, is selected as the maximum rotation speed Nmax(i) of the compressor 21. Otherwise, the indoor maximum rotation speed Nmaxi(i) is selected as the maximum rotation speed Nmax(i) of the compressor 21.

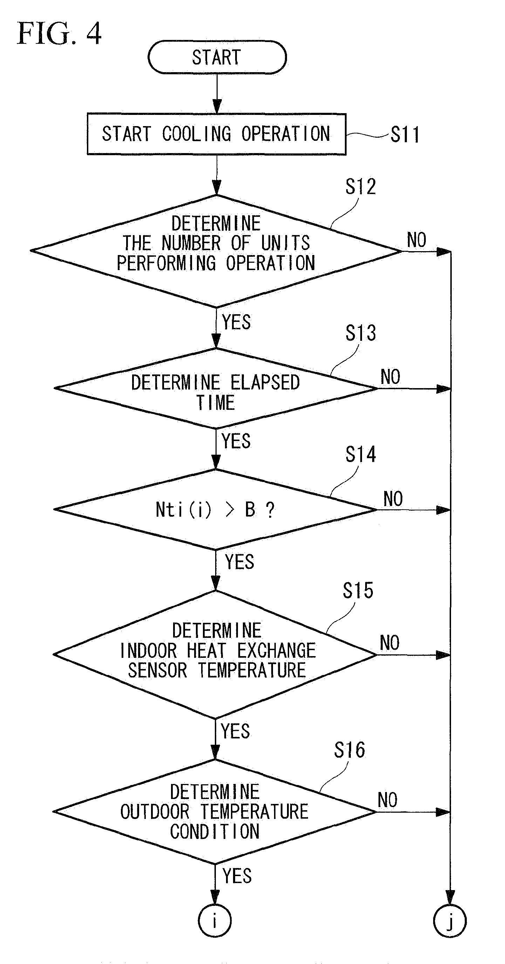

Figs. 4 to 6 are flow charts describing rotation speed control of a compressor in the air conditioner in Fig. 1.

The rotation speed control of the compressor 21 will now be described with reference to Figs. 4 to 6.

As shown in Fig. 4, when cooling operation of the air conditioner 1 starts (step S11), the control unit 7 determines the number of indoor units performing cooling operation (step S12). In the present embodiment where the four single-type indoor units 4A, 4B, 4C and 4D are provided, determination is made to whether the number of the single-type indoor units performing cooling operation is equal to or less than two.

If the number of the single-type indoor units performing cooling operation is equal to or less than two (YES), determination is made to whether a prescribed interval, such as about 5 minutes, has elapsed since cooling operation started at single-type indoor units performing cooling operation or the like (step S13) (in this description, suppose that the single-type indoor unit 4A is performing cooling operation).

If the prescribed interval has elapsed since cooling operation started at the single-type indoor unit 4A or the like (YES), determination is made to whether a request rotation speed Nti(i) is larger than a minimum value B of the request rotation speed (step S14).

A method of calculating the request rotation speed Nti(i) will now be described.

As described above, the request rotation speed Nti(i) is calculated in the calculation unit 6 based on a measured value ThI-A(i) measured by the suction sensor 42 and a preset correction temperature TS(i) obtained from a preset temperature.

Specifically, the request rotation speed Nti(i) is calculated based a deviation E(i), a temporal variation ΔE(i) of the deviation E(i), and a rotation speed increment ΔNf.

The deviation E(i) is a deviation of the measured value ThI-A(i) and the preset correction temperature TS(i), and is calculated based on the following formulas. For simplicity, an index (i) will be omitted in the following explanation.

$$\text{During heating operation: } E(n) = TS(n) - ThI\text{-}A(n) \ (°C)$$

$$\text{During cooling operation: } E(n) = ThI\text{-}A(n) - TS(n) \ (°C)$$

The n represent a sampling number. Also, a value of the deviation E(i) is quantized by rounding down to the nearest quarter of 1°C.

The temporal variation ∆E of the deviation E is calculated based on the following formula:

$$\Delta E(n) \; = \; (E(n-1) \; - \; E(n)) \; \div \; T$$

where T represents a sampling time, and is supposed as about 40 seconds in the present embodiment. Also, a value of the temporal variation ∆E of the deviation E is quantized by rounding down to the nearest quarter of 1°C per sec.

The rotation speed increment ∆Nf is calculated based on E and ∆E calculated by the above-described formulas, and a predefined table. Values of the increment ∆Nf of a rotation speed in the table are determined according to rules of fuzzy operations.

The calculation unit 6 calculates a request rotation speed Nti(n) at the current sampling time point based on the rotation speed increment ∆Nf calculated as described above and the request rotation speed Nti(n-1) at the previous sampling time point.

That is, if -24 < Nti(n-1) <0 and ∆Nf ≥ 0, the calculation unit 6 calculates the request rotation speed Nti(n) based on the following formula:

$$Nti(n) \; = \; 0 \; + \; \Delta Nf$$

If Nti(n-1) = -24 and ∆Nf > 0, the calculation unit 6 calculates the request rotation speed Nti(n) based on the following formula:

$$Nti(n) \; = \; 0$$

At this time, an indoor unit stops cooling thermo operation and restart cooling operation.

Otherwise, the calculation unit 6 calculates the request rotation speed Nti(n) based on the following formula.

$$Nti(n) \; = \; Nti(n-1) \; + \; \Delta Nf$$

The minimum value of Nti is -24, and if Nti = -24 the indoor units stops cooling operation and starts cooling thermo operation.

If the request rotation speed Nti(i) is larger than the minimum value B of the request rotation speed (YES), determination is made to whether a temperature measured by the indoor heat exchange sensor 43 is less than a prescribed heat exchange temperature, such as about 16°C (step S15).

If the temperature measured by the indoor heat exchange sensor 43 is less than the prescribed heat exchange temperature (YES), determination is made to whether an outdoor air temperature measured by the outdoor temperature sensor 35 is equal to or higher than a prescribed temperature, such as about 23°C (step S16).

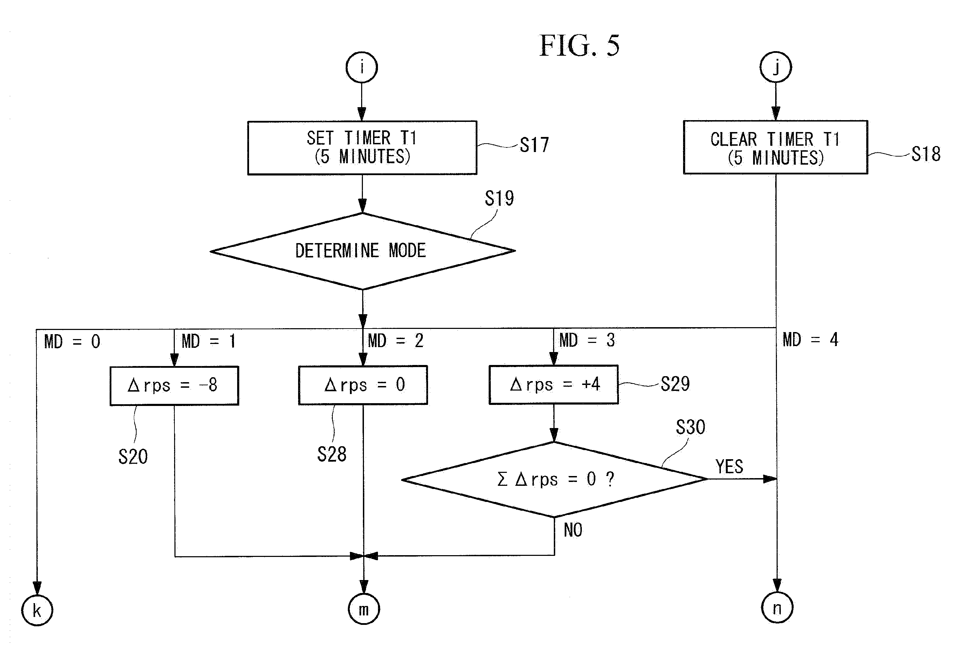

If the outdoor air temperature measured by the outdoor temperature sensor 35 is equal to or higher than the prescribed temperature (YES), then as shown in Fig. 5, a period of a sampling timer T1, which is about 5 minutes in the present embodiment, is set (step S17).

The control unit 7 determines a control mode MD of a rotation speed at the compressor 21 (step S19). Specifically, the control unit 7 determines the control mode MD based on the following table consisting of a measured value ThI-R1(i) of the indoor heat exchange sensor 43, a status of the sampling timer T1, a status of a sampling timer T2, and a status of the controls status ST.

[Table 1]

| ThI-R1(i) | | 0 | | | | 1 | | | | 2 | | | |
|---|---|---|---|---|---|---|---|---|---|---|---|---|---|
| T1 | | 0 | | 1 | | 0 | | 1 | | 0 | | 1 | |
| T2 | | 0 | 1 | 0 | 1 | 0 | 1 | 0 | 1 | 0 | 1 | 0 | 1 |
| ST | 0 | MD=4 | | MD=1 | | MD=4 | | MD=4 | | MD=4 | | MD=4 | |
| | 1 | MD=4 | | MD=0 | MD=1 | MD=4 | | MD=0 | MD=2 | MD=4 | | MD=0 | MD=3 |

Fig. 7 is a chart describing a determination condition of a temperature measured by an indoor heat exchange sensor.

As shown in the above-described table and Fig. 7, the control unit 7 determines the measured value ThI-R1(i) of the indoor heat exchange sensor as "0" if the measured value is less than 16°C (or a prescribed heat exchange temperature value), "1" if the measured value is equal to or higher than 16°C and less than 18°C, or "2" if the measured value is equal to or higher than 18°C.

The status of the sampling timer T1 or the sampling timer T2 indicates whether a sampling period of the sampling timer T1 or the sampling timer T2 is less than 5 minutes, and it is "0" if the sampling period is less than 5 minutes or "1" if the sampling period exceeded 5 minutes.

The status of the control status ST indicates whether control of the control unit 7 is performed during normal cooling control or dew attachment prevention control, which is a feature of the present invention, and it is "0" if the control is performed during normal cooling control or "1" if the control is performed during dew attachment prevention control.

As shown in the above table, if the measured value ThI-R1(i) is "0", "1" or "2", the status of the sampling timer T1 is "1", the status of the sampling timer T2 is "0" and the status of the control status ST is "1", the control mode MD is determined as "0" (MD = 0).

If the measured value ThI-R1(i) is "0", the status of the sampling timer T1 is "1" and the status of the control status ST is "0", or if the measured value ThI-R1(i) is "0", the status of the sampling timer T1 is "1", the status of the sampling timer T2 is "1" and the status of the control status ST is "1", the control mode MD is determined as "1" (MD = 1).

If the measured value ThI-R1(i) is "1", the status of the sampling timer T1 is "1", the status of the sampling timer T2 is "1" and the status of the control status ST is "1", the control mode MD is determined as "2" (MD = 2).

If the measured value ThI-R1(i) is "2", the status of the sampling timer T1 is "1", the status of the sampling timer T2 is "1" and the status of the control status ST is "1", the control mode MD is determined as "3" (MD = 3).

Otherwise, that is, if the measured value ThI-R1(i) is "0", "1" or "2" and the status of the sampling timer T1 is "0", or if the measured value ThI-R1(i) is "1" or "2", the status of the sampling timer T1 is "1" and the status of the control status ST is "0", the control mode MD is determined as "4" (MD = 4) .

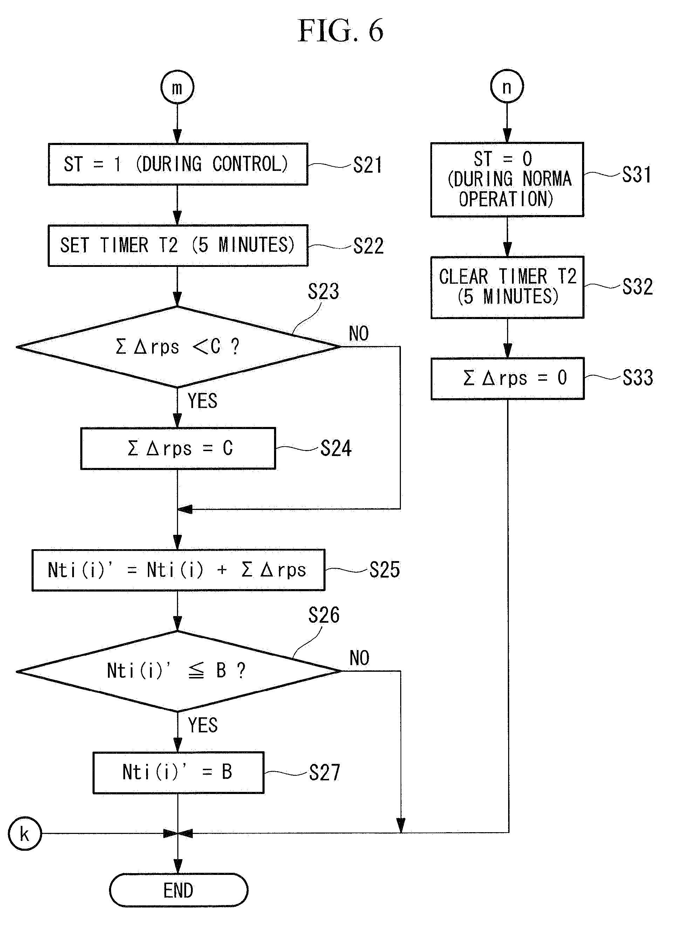

As shown in Figs. 5 and 6, if the control mode MD is determined as "0", control is performed to wait until the next sampling is done. That is, the control unit 7 repeats a loop to go back to step S12 until a sampling period elapses.

As shown in Figs. 5 and 6, if the control mode MD is determined as "1", control to reduce the rotation speed of the compressor 21, or control of a rotation speed reduction mode (or discharge flow rate reduction mode), is performed. That is, the control unit 7 sets a rotation speed correction value $\Delta$rps to -8 (rps) (step S20), the status of the control status ST to "1", which indicates that dew attachment prevention control is being performed (step S21), and the sampling period of the sampling timer T2 to 5 minutes (step S22).

Then, as shown in Fig. 6, the control unit 7 determines whether an integrated value $\Sigma\Delta$rps of the rotation speed correction value $\Delta$rps is less than a minimum value C of the integration value (step S23).

If the integrated value $\Sigma\Delta$rps is less than the minimum value C (YES), the control unit 7 replaces the value of the integrated value $\Sigma\Delta$rps with the minimum value C of the integrated value (step S24).

On the other hand, if the integrated value $\Sigma\Delta$rps is equal to or larger than the minimum value C, the above-described step 24 is skipped and the process goes to the next step.

The control unit 7 calculates a corrected request rotation speed Nti(i)' by adding the rotation speed correction value $\Sigma\Delta$rps to the request rotation speed Nti(i) (step S25), and determines whether the corrected request rotation speed Nti(i)' is equal to or less than the minimum value B of the request rotation speed (step S26).

If the corrected request rotation speed Nti(i)' is equal to or less than the minimum value B (YES), the control unit 7 replaces the corrected request rotation speed Nti(i)' with the minimum value B (step S27). On the other hand, if the corrected request rotation speed Nti(i)' is larger than the minimum value B (NO), the control unit 7 does not change the value of the corrected request rotation speed Nti(i)'.

Based on the corrected request rotation speed Nti(i)' obtained as described above, the control unit 7 controls the rotation speed of the compressor 21. After that, the process goes back to step S12 and the above-describe control is repeated.

As shown in Fig. 5, if the control mode MD is determined as "2", control to maintain the rotation speed of the compressor 21, or control of a rotation speed maintenance mode (or discharge flow rate maintenance mode), is performed. That is, the control unit 7 sets the rotation speed correction value $\Delta$rps to zero (rps) (step S28). Then, as shown in Figs. 5 and 6, the control from step S21 is performed.

As shown in Fig. 5, if the control mode MD is determined as "3", control to increase the rotation speed of the compressor 21, or control of a rotation speed increase mode (or discharge flow rate increase mode) is performed. That is, the control unit 7 sets the rotation speed correction value $\Delta$rps to +4 (rps) (step S29), and determines whether the integrated value $\Sigma\Delta$rps of the rotation speed correction value $\Delta$rps is equal to zero (rps) (step S30). If the integrated value $\Sigma\Delta$rps is not equal to zero (rps) (NO), the control from step S21 is performed as shown in Figs. 5 and 6.

Meanwhile, if the number of single-type indoor units performing cooling operation is more than two (NO) at step S12, if the prescribed interval has not elapsed since cooling operation started at the single-type indoor unit 4A or the like (NO) at step S13, if the request rotation speed Nti(i) is equal to or less than the minimum value B of the request rotation speed (NO) at step S14, if a temperature measured by the indoor heat exchange sensor 43 is higher than the prescribed heat exchange temperature (NO) at step S15, or if an outdoor air temperature measured by the outdoor air temperature sensor 35 is less than the prescribed temperature (NO) at step S16, the period of the sampling timer T1 is set to zero, or cleared (step S18), as shown in Fig. 5.

Then, as shown in Fig. 5, the control unit 7 sets the status of the control status ST to "0", which indicates that normal cooling control is being performed (step S31), and sets (or clears) the sampling period of the sampling timer T2 to zero (step S32). Also, the control unit 7 sets the integrated value ΣΔrps of the rotation speed correction value Δrps to zero (step S33). The process then goes back to step S12 and the above-described control is repeated.

At step S19, if the control mode MD is determined as "4", dew attachment prevention control is cancelled. That is, as shown in Figs. 4 to 6, the control unit 7 performs the control from step S31, which comes after step S18.
Likewise, at step S30, if the integrated value ΣΔrps is determined as zero (rps) (YES), the control unit 7 performs the control from step S31, which comes after step S18.

According to the above configuration, dew attachment or dew condensation can be prevented in the single-type indoor units 4A, 4B, 4C and 4D connected to the outdoor unit 2, regardless of the indoor maximum rotation speed Nmaxi(i) stored in the single-type indoor units 4A, 4B, 4C and 4D, airflow control performed at the single-type indoor units 4A, 4B, 4C and 4D, or the like.

Specifically, when dew attachment or the like easily occurs, or when the temperature of the air sucked into the single-type indoor units 4A, 4B, 4C and 4D reaches or exceeds a prescribed air temperature (such as about 22°C) and a prescribed interval (such as about a minute) elapses, the maximum rotation speed of the compressor 21 is set to the outdoor maximum rotation speed X. This makes the maximum value of the flow rate of a refrigerant discharged from the compressor 21 smaller, compared with when the maximum rotation speed is set to the indoor maximum rotation speed Nmaxi(i), lowering the cooling capacity at the single-type indoor units 4A, 4B, 4C and 4D. As a result, dew attachment or dew condensation can be prevented in the single-type indoor units 4A, 4B, 4C and 4D. Also, since the outdoor maximum rotation speed X is stored in the control unit 7 provided in the outdoor unit 2, dew attachment or dew condensation can be prevented in the single-type indoor units 4A, 4B, 4C and 4D without additional efforts such as modifying the single-type indoor units 4A, 4B, 4C and 4D.

On the other hand, when dew attachment or the like hardly occurs, or when the temperature of the air sucked into the single-type indoor units 4A, 4B, 4C and 4D is less than the prescribed air temperature or when the temperature of the air is equal to or higher than the prescribed air temperature but the prescribed interval has not elapsed, the maximum rotation speed of the compressor 21 is set to the indoor maximum rotation speed Nmaxi(i). The indoor maximum rotation speed Nmaxi(i) is defined on the basis of a type or capacity of the single-type indoor units 4A, 4B, 4C and 4D without considering preventing dew attachment or the like, and is larger than the outdoor maximum rotation speed X which is defined for the purpose of preventing dew attachment or the like. Thus, compared with when the maximum rotation speed is set to the outdoor maximum rotation speed X, the maximum value of the rotation speed of the compressor 21 becomes higher, and the single-type indoor units 4A, 4B, 4C and 4D can exercise their cooling capacities defined in design.

Particularly, even when a flow rate of a refrigerant supplied to the single-type indoor units 4A, 4B, 4C and 4D becomes too high and dew attachment or the like easily occurs, or when a majority of the plurality of single-type indoor units 4A, 4B, 4C and 4D connected to the outdoor unit 2 stopped cooling operation and half or less than half of the single-type indoor units, such as the single-type indoor unit 4A, is performing cooling operation, dew attachment or dew condensation can be prevented in the single-type indoor unit 4A.

Specifically, when the temperature of the indoor heat exchanger 41 is less than a prescribed heat exchange temperature, correction to reduce a request rotation speed is performed, and the compressor 21 is controlled based on the corrected rotation speed. This reduces the flow rate of a refrigerant discharged from the compressor 21 and the flow rate of a refrigerant supplied to the indoor heat exchanger 41. As a result, the temperature of the indoor heat exchanger 41 reaches or exceeds the prescribed heat exchange temperature, enabling to prevent dew attachment or dew condensation in the single-type indoor unit 4A.

Reference Signs List

1          air conditioner

2          outdoor unit (multi-type outdoor unit)

| 4A, 4B, 4C, 4D | single-type indoor unit |
| --- | --- |
| 7 | control unit |
| 21 | compressor |
| 45 | storage unit |
| X | outdoor maximum rotation speed (outdoor maximum request flow rate) |
| Nmaxi(i) | indoor maximum rotation speed (indoor maximum request flow rate) |
| S3 | suction temperature determination step |
| S4 | maximum value obtaining step |
| S5 | default value obtaining step |
| S6 | selection step |

**Claims**

1. An air conditioner in which a single-type indoor unit corresponding to an outdoor unit on a one-to-one basis is connected to a multi-type outdoor unit corresponding to indoor units on a one-to-many basis, the air conditioner comprising:

a control unit provided in the multi-type outdoor unit to control a discharge refrigerant flow rate of a compressor for circulating a refrigerant between the multi-type outdoor unit and the single-type indoor unit; and
a storage unit to store information relating to the single-type indoor unit and an indoor maximum request flow rate which is an upper limit of the discharge refrigerant flow rate requested from the single-type indoor unit to the compressor,
wherein the control unit stores an outdoor maximum request flow rate which is an upper limit of the discharge refrigerant flow rate determined on the basis of the information obtained from the storage unit and is smaller than the indoor maximum request flow rate, and
during cooling operation, the control unit controls the discharge refrigerant flow rate on the basis of the outdoor maximum request flow rate when a temperature of the air sucked into the single-type indoor unit reaches or exceeds a prescribed air temperature and a prescribed interval elapses,
or controls the discharge refrigerant flow rate on the basis of the indoor maximum request flow rate otherwise.

2. An air conditioner according to claim 1, wherein:

when a plurality of the single-type indoor units are connected to the multi-type outdoor unit and half or less than half of the single-type indoor units are performing cooling operation,
the control unit performs correction to reduce a request refrigerant flow rate which is the discharge refrigerant flow rate requested from the single-type indoor unit performing cooling operation to the control unit, if a temperature of an indoor heat exchanger of the single-type indoor unit performing cooling operation is less than a prescribed heat exchange temperature.

3. A control method of an air conditioner in which a single-type indoor unit corresponding to an outdoor unit on a one-to-one basis is connected to a multi-type outdoor unit corresponding to indoor units on a one-to-many basis, the method comprising:

a suction temperature determination step for determining whether a temperature of the air sucked into the single-type indoor unit reached or exceeded a prescribed temperature and a prescribed interval elapsed;
a maximum value obtaining step for obtaining an outdoor maximum request flow rate which is an upper limit of a discharge refrigerant flow rate of a compressor determined on the basis of information relating to the single-type indoor unit and is less than an indoor maximum flow rate stored in the single-type indoor unit, if the condition of the suction temperature determination step is met;

a default value obtaining step for obtaining, instead of the outdoor maximum request flow rate, a default maximum request flow rate which is larger than the indoor maximum request flow rate, if the condition of the suction temperature determination step is not met; and

a selection step for selecting a smaller value of the outdoor maximum request flow rate and the indoor maximum request flow rate, or a smaller value of the default maximum request flow rate and the indoor maximum request flow rate, as the maximum value of the discharge refrigerant flow rate,

wherein the control unit controls the discharge refrigerant flow rate on the basis of the maximum value of the discharge refrigerant flow rate selected at the selection step.

# FIG. 1

EP 2 530 394 A1

# FIG. 2

EP 2 530 394 A1

EP 2 530 394 A1

# FIG. 3

```
        START
          │
          ▼
  ┌─────────────────┐
  │ START COOLING   │─── S1
  │  OPERATION      │
  └─────────────────┘
          │
          ▼
       ╱────────╲            S2
      ╱ DETERMINE ╲    NO
     ╱ ELAPSED TIME╲──────────────┐
      ╲            ╱               │
       ╲──────────╱                │
          │ YES                    │
          ▼          S3            │
       ╱──────────────╲     NO     │
      ╱   DETERMINE     ╲──────────┤
     ╱ SUCTION TEMPERATURE╲        │
      ╲                  ╱         │
       ╲────────────────╱          │
          │ YES                    │
          ▼                        ▼
  ┌───────────────┐      ┌───────────────┐
  │ Nmaxi(i)' = X │─S4   │ Nmaxi(i)' = A │─S5
  └───────────────┘      └───────────────┘
          │                      │
          ◄──────────────────────┘
          ▼
  ┌────────────────────────────────┐
  │ Nmax(i) = min[Nmaxi(i),Nmaxi(i)'] │─── S6
  └────────────────────────────────┘
          │
          ▼
        END
```

16

FIG. 4

```
                    ┌─────────────┐
                    │    START    │
                    └─────────────┘
                           │
                           ▼
              ┌──────────────────────────┐
              │  START COOLING OPERATION  │─── S11
              └──────────────────────────┘
                           │
                           ▼                      S12
                    ╱─────────────╲
                  ╱   DETERMINE     ╲          NO
                ╱  THE NUMBER OF UNITS ╲──────────────►
                ╲ PERFORMING OPERATION ╱
                  ╲                  ╱
                    ╲─────────────╱
                        │ YES
                        ▼                         S13
                    ╱─────────────╲
                  ╱ DETERMINE ELAPSED ╲       NO
                  ╲      TIME         ╱──────────────►
                    ╲─────────────╱
                        │ YES
                        ▼                         S14
                    ╱─────────────╲
                  ╱                  ╲         NO
                  ╲   Nti(i) > B ?   ╱──────────────►
                    ╲─────────────╱
                        │ YES
                        ▼                         S15
                    ╱─────────────╲
                  ╱   DETERMINE      ╲        NO
                ╱ INDOOR HEAT EXCHANGE ╲─────────────►
                ╲  SENSOR TEMPERATURE  ╱
                    ╲─────────────╱
                        │ YES
                        ▼                         S16
                    ╱─────────────╲
                  ╱   DETERMINE      ╲       NO
                ╱  OUTDOOR TEMPERATURE ╲────────────►
                ╲     CONDITION       ╱
                    ╲─────────────╱
                        │ YES
                        ▼                         ▼
                       (i)                       (j)
```

$Nti(i) > B$ ?

# FIG. 5

(i)

SET TIMER T1
(5 MINUTES) — S17

DETERMINE MODE — S19

MD = 0

MD = 1

$\triangle rps = -8$ — S20

MD = 2

$\triangle rps = 0$ — S28

MD = 3

$\triangle rps = +4$ — S29

$\Sigma \triangle rps = 0$ ? — S30

YES

NO

(k)

(m)

(j)

CLEAR TIMER T1
(5 MINUTES) — S18

MD = 4

(n)

EP 2 530 394 A1

# FIG. 6

```
        (m)                                    (n)
         │                                      │
         ▼                                      ▼
┌──────────────────────────┐        ┌──────────────────────────┐
│  ST = 1 (DURING CONTROL) │─S21    │        ST = 0            │─S31
└──────────────────────────┘        │  (DURING NORMA          │
         │                          │    OPERATION)            │
         ▼                          └──────────────────────────┘
┌──────────────────────────┐                    │
│ SET TIMER T2 (5 MINUTES) │─S22                ▼
└──────────────────────────┘        ┌──────────────────────────┐
         │                          │   CLEAR TIMER T2         │─S32
         ▼          S23             │   (5 MINUTES)            │
        ╱╲                          └──────────────────────────┘
       ╱  ╲          NO                         │
      ╱ ΣΔrps ╲──────────────┐                  ▼
      ╲  <C ? ╱               │        ┌──────────────────────────┐
       ╲    ╱                 │        │      ΣΔrps = 0           │─S33
        ╲╱                    │        └──────────────────────────┘
       YES│                   │                  │
          ▼                   │                  │
┌──────────────────┐          │                  │
│    ΣΔrps = C     │─S24      │                  │
└──────────────────┘          │                  │
          │◄──────────────────┘                  │
          ▼                                       │
┌────────────────────────────────┐               │
│ Nti(i)' = Nti(i) + ΣΔrps       │─S25           │
└────────────────────────────────┘               │
          │              S26                      │
          ▼                                       │
         ╱╲                                       │
        ╱  ╲          NO                          │
       ╱ Nti(i)' ╲──────────────────────┐        │
       ╲  ≦ B ?  ╱                       │        │
        ╲      ╱                         │        │
         ╲╱                              │        │
        YES│                            │        │
           ▼                            │        │
┌──────────────────┐                    │        │
│   Nti(i)' = B    │─S27                │        │
└──────────────────┘                    │        │
           │                            │        │
  (k)──────┼──◄──────────────────────────┴────────┘
           ▼
      ┌─────────┐
      │   END   │
      └─────────┘
```

# FIG. 7

MEASURED VALUE ThI-R1(i)
OF INDOOR HEAT EXCHANGE SENSOR

## INTERNATIONAL SEARCH REPORT

| International application No. |
|---|
| PCT/JP2011/051049 |

**A. CLASSIFICATION OF SUBJECT MATTER**
*F24F11/02*(2006.01)i

According to International Patent Classification (IPC) or to both national classification and IPC

**B. FIELDS SEARCHED**

Minimum documentation searched (classification system followed by classification symbols)
F24F11/02

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2008-209020 A (Mitsubishi Heavy Industries, Ltd.), 11 September 2008 (11.09.2008), claims 1, 2; paragraphs [0025] to [0033]; fig. 2 (Family: none) | 1-3 |
| Y | JP 11-230599 A (Matsushita Electric Industrial Co., Ltd.), 27 August 1999 (27.08.1999), claims 2 to 4; paragraphs [0010] to [0015]; fig. 1 to 3 (Family: none) | 1-3 |

☒ Further documents are listed in the continuation of Box C.     ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 06 April, 2011 (06.04.11) | 19 April, 2011 (19.04.11) |

| Name and mailing address of the ISA/<br>   Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2011/051049

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-13789 A (Daikin Industries, Ltd.), 18 January 2002 (18.01.2002), paragraphs [0018] to [0022]; fig. 3 (Family: none) | 1-3 |
| Y | JP 4-106357 A (Toshiba Corp.), 08 April 1992 (08.04.1992), page 3, upper right column, line 14 to lower right column, line 10; fig. 6 (Family: none) | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006234296 A